(19) Europäisches Patentamt / European Patent Office / Office européen des brevets

(11) **EP 4 643 962 A1**

(12) **EUROPEAN PATENT APPLICATION**
published in accordance with Art. 153(4) EPC

(43) Date of publication:
**05.11.2025 Bulletin 2025/45**

(21) Application number: **23912129.6**

(22) Date of filing: **26.12.2023**

(51) International Patent Classification (IPC):
***A63B 59/45** (2015.01)* ***A63B 59/42** (2015.01)*
***B32B 3/24** (2006.01)* ***B32B 3/30** (2006.01)*
***B32B 25/20** (2006.01)* ***C08K 3/36** (2006.01)*
***C08K 7/24** (2006.01)* ***C08L 83/05** (2006.01)*
***C08L 83/06** (2006.01)* ***C08L 83/07** (2006.01)*
***A63B 102/16** (2015.01)*

(52) Cooperative Patent Classification (CPC):
**A63B 59/42; A63B 59/45; B32B 3/266; B32B 3/30; B32B 25/20; C08K 3/36; C08K 7/24; C08L 83/04; C08L 83/06;** A63B 2102/16

(86) International application number:
**PCT/JP2023/046623**

(87) International publication number:
**WO 2024/143350 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022212453**

(71) Applicant: **Canon Kabushiki Kaisha**
**Ohta-Ku**
**Tokyo 1468501 (JP)**

(72) Inventors:
- **UNO, Masashi**
  **Tokyo 146-8501 (JP)**
- **TERADA, Kenya**
  **Tokyo 146-8501 (JP)**
- **URUSHIHARA, Shohei**
  **Tokyo 146-8501 (JP)**
- **MORI, Hironori**
  **Tokyo 146-8501 (JP)**
- **NOGUCHI, Atsushi**
  **Tokyo 146-8501 (JP)**
- **SUGIYAMA, Ryo**
  **Tokyo 146-8501 (JP)**
- **NAKAMURA, Minoru**
  **Tokyo 146-8501 (JP)**

(74) Representative: **TBK**
**Bavariaring 4-6**
**80336 München (DE)**

# (54) TABLE TENNIS RUBBER SHEET AND TABLE TENNIS RACKET

(57) Provided is a soft rubber backing and a table tennis racket that demonstrates stable striking performance regardless of temperature changes and is capable of suppressing delamination of a solid rubber sheet and a sponge sheet. This table tennis rubber sheet includes a sponge sheet and a solid rubber sheet laminated on one surface of the sponge sheet. The sponge sheet includes cross-linked silicone rubber as as binder. The sponge sheet includes a plurality of openings in a surface Ssp on a side opposing the solid rubber sheet. The solid rubber sheet includes a plurality of protrusions of a specific range on a surface Ssr on a side opposing the surface Ssp. When a specific observation region is set on the surface Ssp of the sponge sheet, the average of the ratio of the openings to a total area is from 20.0 to 50.0%, and the area of the openings and the area of opposing surfaces of the protrusions relative to Ssp satisfy a specific relationship.

EP 4 643 962 A1

Fig. 1A

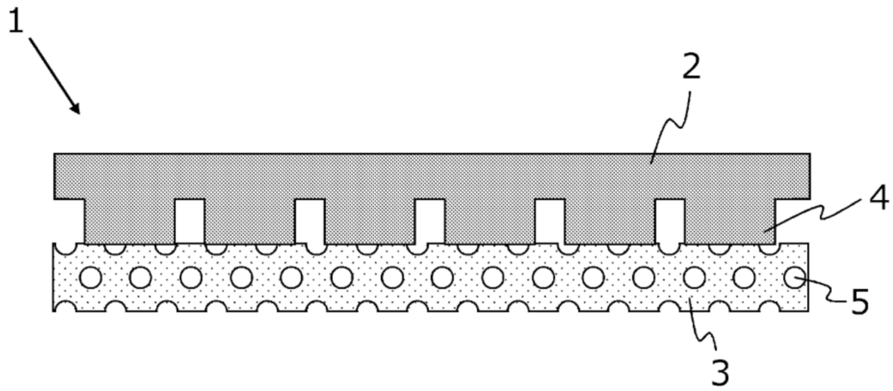


Fig. 1B

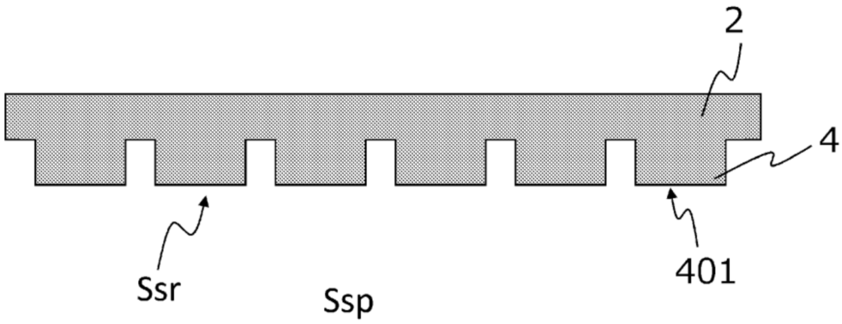


Fig. 1C

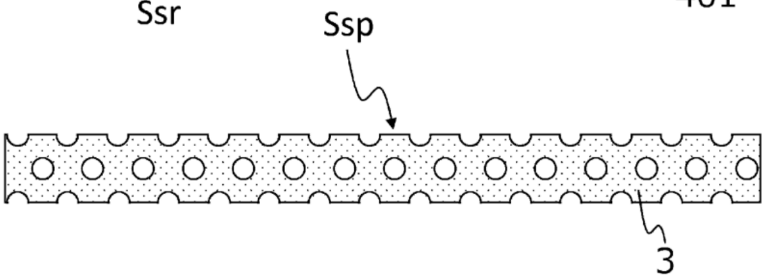

## Description

### TECHNICAL FIELD

The present disclosure relates to a table tennis rubber sheet and a table tennis racket.

### BACKGROUND ART

A table tennis racket has a rubber sheet made of a rubber material and attached to a plate called a blade. When a ball is hit, the rubber sheet is deformed by the contact with the ball, and the force returning to the original shape from this deformation gives spin and speed to the hit ball.

In order to increase the amount of spin applied to the hit ball, the more flexible the rubber sheet is and the greater the amount of deformation is, the more the area of contact with the ball increases, and the greater the frictional force is, which is thus advantageous. Meanwhile, simply using a soft rubber sheet may slow the speed of recovery from deformation and decrease the speed of the hit ball. In order to achieve both the amount of spin and the speed of the hit ball, it is preferable to have both high flexibility and an excellent recovery property from deformation. Conventionally, in order to achieve both of these two properties at a high level, a rubber sheet of a two-layer structure in which a solid rubber sheet having a recovery property from deformation is laminated on a flexible sponge sheet has been known.

Among such rubber sheets of a double-layer structure, rubber sheets for table tennis called "back soft rubber" can achieve both the amount of spin and the ball speed at a high level. That is, the rubber sheet 1 for table tennis, referred to as back soft rubber, is composed of a solid rubber sheet 2 and a sponge sheet 3, as illustrated in Fig. 1A. The solid rubber sheet 2 has a flat ball hitting surface on the side opposite to the side facing the sponge sheet 3, has a plurality of protrusions 4 on the side facing the sponge sheet 3, and is contact with and bonded to the sponge sheet 3 directly or via an adhesive on the surface of the protrusions 4 facing the sponge sheet. The sponge sheet 3 has a foam cell 5.

When a ball is hit by a table tennis racket provided with such a table tennis rubber sheet, the protrusions 4 of the solid rubber sheet bite into the sponge sheet 3 to sufficiently deform the whole of the table tennis rubber sheet 1, and a sufficient contact area with a ball can be taken because the ball hit surface is flat. Therefore, a greater amount of spin can be provided to a ball while maintaining excellent speed performance.

Also, from the viewpoint of the material design of the rubber sheet, in order to further improve hit ball performance such as the amount of spin and the ball speed, the viscoelasticity of the rubber constituting the rubber sheet is important. For example, Patent Document 1 shows that a rubber sheet having excellent hit ball performance can be obtained by controlling Young's modulus E' to be within the range from 0.01 MPa to 1 MPa and a loss tangent tan$\delta$ to 0.03 or less. Silicone rubber, butadiene rubber, and natural rubber are also listed as preferable materials for satisfying such viscoelasticity.

Furthermore, Patent Document 2 shows that a rubber sheet made of silicone rubber can suppress a change in viscoelasticity with temperatures. By using such a rubber sheet, for example, even when the temperature of a match venue changes, a player can play with stable hit ball performances.

### CITATION LIST

### PATENT DOCUMENT

[Patent Document 1] Japanese Patent Laid-Open No. 2011-056004
[Patent Document 2] Japanese Patent Laid-Open No. 2011-056005

### SUMMARY OF INVENTION

### TECHNICAL PROBLEM

The silicone rubber used in Patent Document 1 and Patent Document 2 described above is an excellent material having a suitable viscoelastic property and showing little change in viscoelasticity with temperatures. However, according to the studies made by the present inventors, the present inventors have newly found that when silicone rubber is used for the sponge sheet in the back soft rubber, the solid rubber sheet and the sponge sheet tend to delaminate when the ball is repeatedly hit.

According to at least one aspect of the present disclosure, there is provided a table tennis rubber sheet that has low-temperature dependence on hit ball performance and can inhibit the delamination between a solid rubber sheet and a

sponge sheet. Also, according to at least one aspect of the present disclosure, there is provided a table tennis racket that can exhibit stable hit ball performance over a longer period of time.

SOLUTION TO PROBLEM

According to at least one embodiment of the present disclosure, there is provided a table tennis rubber sheet comprising:

a sponge sheet; and
a solid rubber sheet laminated on one surface of the sponge sheet, wherein
the sponge sheet comprises a crosslinked silicone rubber as a binder;
the sponge sheet has a plurality of apertures on a surface Ssp on a side facing the solid rubber sheet;
the solid rubber sheet has a plurality of protrusions on a surface Ssr on a side facing the surface Ssp;
the protrusions are present at a density of 10 to 30 protrusions per $cm^2$ unit area of the surface Ssr;
each of the protrusions has a facing surface facing the surface Ssp;
each facing surface of the protrusions is in contact with the surface Ssp of the sponge sheet directly or via an adhesive; and
when 10 square observation regions each having a length of 10 mm on one side are placed on the surface Ssp of the sponge sheet so that the observation regions do not overlap each other,

each of the observation regions includes a plurality of the apertures, and
an average of percentages of total areas of the apertures included in each of the observation regions to the area of each of the observation regions is 20.0 to 50.0%; and
when the smallest area out of areas of the facing surface of each of the protrusions in contact with the surface Ssp is defined as area A, and the largest area out of areas of the apertures in each of the observation regions is defined as area B, the area A and the area B satisfy the following formula (I):

$$\text{area B/area A} < 0.500 \ldots \text{(I)}.$$

Also, according to at least one embodiment of the present disclosure, there is provided a table tennis rubber sheet comprising:

a sponge sheet; and
a solid rubber sheet laminated on one surface of the sponge sheet, wherein
the sponge sheet comprises a crosslinked silicone rubber as a binder;
the sponge sheet has a plurality of apertures on a side facing the solid rubber sheet;
the solid rubber sheet has a plurality of protrusions on a side facing the sponge sheet;
the protrusions are present at a density of 10 to 30 protrusions per $cm^2$ unit area in a plan view on a side of the solid rubber sheet facing the sponge sheet;
each of the protrusions has a facing surface facing the sponge sheet on a side opposite to the solid rubber sheet;
each facing surface of the protrusions is in contact with the sponge sheet on a side facing the solid rubber sheet directly or via an adhesive; and
when 10 square observation regions each having a length of 10 mm on one side are placed so that the observation regions do not overlap each other in a plan view on a side of the sponge sheet facing the solid rubber sheet,

each of the observation regions include a plurality of the apertures,
an average of percentages of total areas of the apertures included in each of the observation regions to an area of each of the observation regions is 20.0 to 50.0%; and
when the smallest area out of areas of the facing surfaces of each of the protrusions in contact with a side of the sponge sheet facing the solid rubber sheet is defined as area A, and the largest area out of areas of the apertures in each of the observation regions is defined as area B, the area A and the area B satisfy the following formula (I):

$$\text{area B/area A} < 0.500 \ldots \text{(I)}.$$

Also, according to at least one embodiment of the present disclosure, there is provided a table tennis racket comprising:

a racket main body; and
a table tennis rubber sheet attached to at least one surface of the racket main body, wherein
the table tennis rubber sheet is the table tennis rubber sheet according to above mentioned, and
a surface of the sponge sheet on a side opposite to a surface on a side facing the solid rubber sheet of the sponge sheet is attached to the surface of the racket main body.

## ADVANTAGEOUS EFFECTS OF INVENTION

At least one aspect of the present disclosure provides a table tennis rubber sheet that exhibits stable hit ball performance independently of temperature changes and can suppress the delamination between a solid rubber sheet and a sponge sheet. In addition, at least one aspect of the disclosure provides a table tennis racket provided with the above table tennis rubber sheet.

## BRIEF DESCRIPTION OF DRAWINGS

[Fig. 1]
Fig. 1 is a cross-sectional view of a back soft rubber. Fig. 1A is a cross-sectional view of the entire back soft rubber. Fig. 1B is a cross-sectional view of a solid rubber sheet constituting the back soft rubber shown in Fig. 1A. Fig. 1C is a cross-sectional view of a sponge sheet constituting the back soft rubber illustrated in Fig. 1A.
[Fig. 2]
Fig. 2 is a schematic view illustrating the open state of the foam cells on the adhesive surface between the solid rubber sheet and the sponge sheet.
[Fig. 3]
Fig. 3 is a schematic view illustrating a cross-section of the sponge sheet.
[Fig. 4]
Fig. 4 is a schematic cross-sectional view of the solid rubber sheet.
[Fig. 5]
Fig. 5 is a schematic view of the bottom surface of the solid rubber sheet.
[Fig. 6]
Fig. 6 is a view illustrating an example of a mold for molding the solid rubber sheet.
[Fig. 7]
Fig. 7 is a schematic view illustrating the procedure for evaluating the hit ball performance of Examples.
[Fig. 8]
Fig. 8 is a schematic view illustrating the procedure for evaluating bonding in Examples.

## DESCRIPTION OF EMBODIMENTS

Unless otherwise specified, descriptions of numerical ranges such as "from XX to YY" or "XX to YY" in the present disclosure include the numbers at the upper and lower limits of the range. When numerical ranges are described in stages, the upper and lower limits of each of each numerical range may be combined arbitrarily. In the present disclosure, wording such as "at least one selected from the group consisting of XX, YY and ZZ" means any of: XX; YY; ZZ; a combination of XX and YY; a combination of XX and ZZ; a combination of YY and ZZ; or a combination of XX and YY and ZZ.
The present inventors have studied to solve the above problems. That is, with regard to a back soft rubber using silicone rubber as a sponge sheet, the surface of the sponge sheet (facing surface facing the solid rubber sheet) at a position where the sponge sheet and the solid rubber sheet are delaminated was observed. As a result, many sites where the foam cells were broken were observed. It is presumed from this fact that when the rubber sheet is deformed when a ball is hit, the foam cells are broken by the load applied to the sponge sheet, and the solid rubber sheet and the sponge sheet delaminate starting from the broken point. In addition, more cells in which the area of the aperture is large are present in sites where the delamination occurred than in sites where the delamination did not occur.
As shown in Fig. 2, the presence of the foam cell 6 having a large aperture area reduces the contact area of the sponge sheet 3 with the protrusions 4 of the solid rubber sheet 2. Therefore, it is presumed that the load of deformation by hitting a ball is concentrated on a narrow area, making the foam cells more prone to breakage. It is believed that the reason why such delamination was particularly prominent in the back soft rubber using silicone rubber as a sponge sheet is because silicone rubber has a weaker mechanical strength than natural rubber or the like.
As described above, in order to solve the problems specific to back soft rubber using silicone rubber as sponge sheets, the present inventors have made additional studies. As a result, the present inventors have found that it is effective

for achieving the above purpose to adjust the percentage of the total area of the apertures on the side of the sponge sheet, which constitutes the back soft rubber, facing the solid rubber sheet (hereinafter, sometimes referred to as "surface Ssp" (see Fig. 1C)) and the relationship between the area of the apertures and the area of the facing surface of the sponge sheet on the side facing the solid rubber sheet on each of the plurality of protrusions of the solid rubber sheet to be within the specific ranges.

In order to suppress the delamination between the solid rubber sheet and the sponge sheet, it is considered important to first ensure a sufficient contact area between each of the protrusions provided on the solid rubber sheet and the surface Ssp of the sponge sheet.

That is, it is important to control the average of the percentages of the total areas of the apertures on the surface Ssp of the sponge sheet to be 20.0 to 50.0%. That is, in a plan view of the surface Ssp, which is a side of the sponge sheet facing the solid rubber sheet, 10 square observation regions each having a length of 10 mm on one side are placed so that the observation regions do not overlap each other. At this time, each of the observation regions includes a plurality of apertures, and the average of the percentages of the total areas of the apertures included in each of the observation regions to the area of each of the observation regions (hereinafter, also simply referred to as "the percentage of the total area of the apertures") is 20.0 to 50.0%.

Thus, a contact area between the solid rubber sheet and the sponge sheet can be sufficiently secured while maintaining flexibility suitable for exhibiting hit ball performance. If the average of the percentages of the total areas of the apertures is less than 20.0%, the flexibility is insufficient, resulting in a small amount of deformation at the time of hitting the ball and a small contact area between the rubber sheet and the ball. Therefore, the hit ball performance tends to be low, and in particular, the spinning speed of the hit ball tends to be insufficient. In contrast, if the average of the percentages of the total areas of the apertures exceeds 50.0%, the contact area between the solid rubber sheet and the sponge sheet tends to be insufficient, and the bonding performance between the sponge sheet and the solid rubber sheet tends to be low.

The average of the percentages of the total areas of the apertures is preferably 25.0 to 45.0% and more preferably 30.0 to 40.0%. The percentage of the total area of the apertures can be controlled by the amount of the blowing agent added when the sponge sheet is molded. Examples of blowing agents may include solvents such as water, chemical blowing agents, typically azo compounds such as azodicarbonamide, thermally expandable fillers, silanols, and the like.

In order to prevent the sponge sheet from being broken when a ball is hit, it is effective to satisfy the percentage of the total area of the apertures and then set the maximum value B out of the areas of each of the plurality of apertures in a plan view of the surface Ssp of the sponge sheet to less than 0.500 times the minimum value A out of the areas of the facing surface 401 facing the surface Ssp of each of the plurality of protrusions on the side of the solid rubber sheet facing the sponge sheet (which may also be referred to as "surface Ssr" below (see Fig. 1B)).

That is, each of the protrusions of the solid rubber sheet in contact with the surface Ssp has a facing surface facing the surface Ssp, and the smallest area out of the areas of the facing surfaces is defined as an area A. The largest area out of the areas of the apertures in each of the observation regions is defined as area B. At this time, the area A and the area B satisfy the following formula (I).

$$\text{area B/area A} < 0.500 \ldots \text{(I)}$$

By satisfying the above formula (I), the sponge sheet can secure a sufficient contact area for all the protrusions of the solid rubber sheet, and local rupture and delamination caused thereby can be suppressed. If B/A is 0.500 or more, the contact area tends to be insufficient, and the bonding performance of the sponge sheet tends to be low.

From the viewpoint of bonding performance and hit ball performance, for example, B/A is preferably 0.010 to 0.400 and more preferably 0.050 to 0.300.

When silicone rubber is used for the sponge sheet, the maximum value of the area of the aperture tends to be larger than when other rubber materials are used. It is believed that one possible reason for this is the high gas transmittance of the siloxane polymer that constitutes silicone rubber. During the production process of the sponge sheet, air bubbles are formed in the constituent material of the sponge. If the constituent material has high gas transmittance, the gas passes through the wall surface of the foam cell, so that the air bubbles in the vicinity gather together and tend to form one large air bubble. As a result, it is presumed that the maximum value of the area of the aperture is likely to increase.

Accordingly, examples of means for reducing the area B, which is the maximum value of the area of the aperture, may include uniformly dispersing foam nuclei in the constituent material of the sponge sheet in advance. A porous filler such as a porous inorganic filler is suitably used as the foam nucleus, fine bubbles contained in pores of the porous filler become nuclei, and the bubbles grow starting from these nuclei. The means for uniformly dispersing the porous filler in the constituent material of the sponge sheet is not particularly limited, and a known mixer or the like may be employed.

If the foam nuclei are uniformly dispersed in the constituent material of the sponge, the adjacent bubbles will be uniformly aligned at a certain distance. Thus, it is possible to prevent a plurality of bubbles from locally gathering to form one

large bubble, and the value of the area B also decreases.

Meanwhile, if the foam nuclei are unevenly dispersed in the constituent material of the sponge, a plurality of air bubbles are liable to gather together to form one large air bubble in the portion where the distribution of foam nuclei is dense and, as a result, the value of the area B increases. In addition, if the constituent material of the sponge does not contain foam nuclei, the starting points of foaming become random, and the distribution of bubbles is likely to be coarse and dense. As a result, a plurality of bubbles is prone to gather together to form one large bubble in the portion where the distribution of bubbles is dense, so that the value of area B increases.

For the area A, when a mold is used in the production of a solid rubber sheet, the area A can be controlled by the size of the mold. These can control B/A.

The area B is preferably 0.010 to 1.200 $mm^2$ and more preferably 0.020 to 1.050 $mm^2$.

The area A is preferably 2.000 to 2.500 $mm^2$ and more preferably 2.200 to 2.300 $mm^2$.

Hereinafter, preferable embodiments of a table tennis rubber sheet and a table tennis racket using the same will be described in detail.

The table tennis rubber sheet is a rubber sheet of a type called back soft rubber, and as illustrated in Fig. 1A, the table tennis rubber sheet 1 has a structure in which a solid rubber sheet 2 and a sponge sheet 3 are laminated. The table tennis rubber sheet 1 has a sponge sheet 3 and a solid rubber sheet 2 laminated on one surface of the sponge sheet 3. The sponge sheet 3 has a plurality of apertures on a surface Ssp on the side facing the solid rubber sheet 2. The solid rubber sheet 2 has a plurality of protrusions 4 on a side (surface Ssr) facing the surface Ssp.

The top of this protrusion 4 is bonded to the sponge sheet 3. That is, each of the protrusions 4 has a facing surface facing the surface Ssp, and each of the facing surfaces of the protrusions 4 is in contact with the surface Ssp of the sponge sheet 3 directly or via an adhesive. Foam cells 5 are formed in the sponge sheet 3.

<1-1. Shape of Sponge Sheet>

Fig. 3 is a schematic view illustrating a cross-section of the sponge sheet. In Fig. 3, foam cells 5 are formed in the sponge sheet 3. The sponge sheet 3 has a plurality of apertures 8 on a surface Ssp 7 on the side facing the solid rubber sheet. The thickness of the sponge sheet 3 is preferably from 1.0 mm to 2.0 mm. By setting the thickness to 1.0 mm or more, the sponge sheet is sufficiently deformed when a ball is hit, so that spin is easily imparted to the ball. Further, by setting the thickness to 2.0 mm or less, the deformation of the sponge sheet 3 becomes easy to recover, so that the speed can be easily imparted to the hit ball.

Also, for the apertures 8 of the sponge sheet 3, the average of the areas of the apertures 8 is preferably 0.004 to 0.260 $mm^2$ and more preferably 0.008 to 0.200 $mm^2$. By controlling the average of the areas of the apertures 8 to 0.008 $mm^2$ or more, the sponge sheet is sufficiently deformed at the time of hitting a ball, so that spin is easily imparted to the ball. Furthermore, by controlling the average of the areas of the apertures 8 to 0.200 $mm^2$ or less, local breakage of the sponge sheet 3 and delamination caused thereby can be suppressed.

The average of the areas of the apertures 8 can be controlled by, for example, the viscosity of a liquid silicone rubber mixture, which is a constituent material of the sponge sheet. By increasing the viscosity of the liquid silicone rubber mixture, bubbles formed by foaming during sponge molding are less likely to expand, and the average of the areas of the apertures 8 is likely to be small. In contrast, by reducing the viscosity of the liquid silicone rubber mixture, bubbles formed by foaming during sponge molding are likely to expand, and the average of the areas of the apertures 8 is likely to be large.

<1-2. Constituent Materials of Sponge Sheet>

The sponge sheet 2 contains crosslinked silicone rubber as a binder. In the sponge sheet, the crosslinked silicone rubber can be used as a binder for a pigment, a porous inorganic filler, or the like. By using the crosslinked silicone rubber, stable hit ball performance can be exhibited independently of temperature changes, and particularly, the spinning speed of the hit ball under a higher temperature is improved.

Examples of cross-linked silicone rubber may include a cured product obtained by foaming an addition-curable liquid silicone rubber mixture. That is, the crosslinked silicone rubber may be foam rubber. An addition-curable liquid silicone rubber mixture contains an alkenyl group-containing polyorganosiloxane, a hydrosilyl group-containing polyorganosiloxane, and a hydrosilylation catalyst.

Examples of alkenyl group-containing polyorganosiloxanes may include compounds represented by the following formula (1).

[C1]

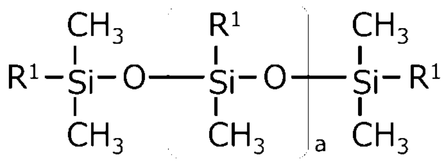

(1)

In the formula (1), $R^1$s each independently represent a methyl group or an alkenyl group, and at least two $R^1$s are alkenyl groups. It is preferable that $100 \leq a \leq 3000$. Examples of alkenyl groups may include a vinyl group, an allyl group, a propenyl group, an isopropenyl group, a butenyl group, an isobutenyl group, a pentenyl group, and a hexenyl group, and a vinyl group is preferable.

The alkenyl group-containing polyorganosiloxane is preferably a compound represented by formula (1-1) and a compound represented by formula (1-2).

[C2]

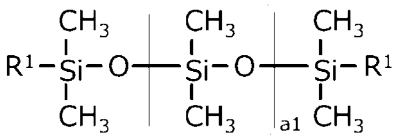

(1 - 1)

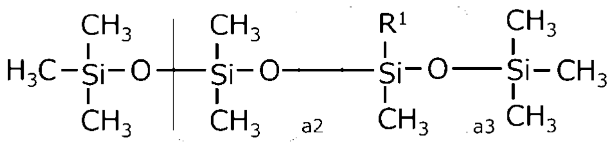

(1 - 2)

In formula (1-1), $R^1$ each independently represents an alkenyl group. It is preferable that $100 \leq a1 \leq 2500$. Examples of alkenyl groups may include a vinyl group, an allyl group, a propenyl group, an isopropenyl group, a butenyl group, an isobutenyl group, a pentenyl group, and a hexenyl group, and a vinyl group is preferable.

In formula (1-2), $R^1$s each independently represent an alkenyl group. It is preferable that $1 \leq a3 \leq 100$ and $100 \leq a2+a3 \leq 2500$. Examples of alkenyl groups may include a vinyl group, an allyl group, a propenyl group, an isopropenyl group, a butenyl group, an isobutenyl group, a pentenyl group, and a hexenyl group, and a vinyl group is preferable.

Examples of hydrosilyl group-containing polyorganosiloxanes may include compounds represented by the following formula (2):

[C3]

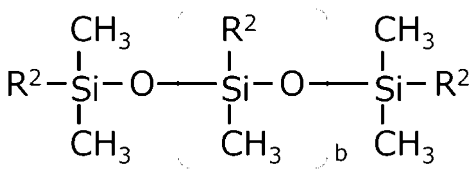

(2)

In formula (2), $R^2$s each independently represent a methyl group or a hydrogen atom, and at least two $R^2$s represent hydrogen atoms. It is preferable that $5 \leq b \leq 1000$.

Preferably, $R^2$s at both ends are each methyl.

The content of the hydrosilyl group-containing polyorganosiloxane in the addition-curable liquid silicone rubber mixture is preferably an amount such that the amount (molar ratio) of the hydrosilyl groups in the hydrosilyl group-containing polyorganosiloxane be 1.1 to 20.0 times, more preferably 2.0 to 10.0 times the amount of alkenyl groups in the alkenyl group-containing polyorganosiloxane.

Examples of hydrosilylation catalysts may include platinum-based, palladium-based, and rhodium-based catalysts, and, in particular, a platinum-based catalyst is preferable. As the platinum-based catalyst, chloroplatinic acid, an alcohol solution of chloroplatinic acid, a complex of chloroplatinic acid and olefin, a complex of chloroplatinic acid and vinylsiloxane, platinum-supported silica, and the like may be used.

Regarding the content of the hydrosilylation catalyst in the addition-curable liquid silicone rubber mixture, the percentage of the mass of the catalyst metal atom to the mass of the alkenyl group-containing polyorganosiloxane is preferably in the range from 1 ppm to 100 ppm.

Examples of means for foaming the addition-curable liquid silicone rubber mixture may include a method of adding a solvent such as water, and evaporating the solvent and foaming the mixture by heating; a method of adding a chemical blowing agent, typically an azo compound such as azodicarbonamide, to foam the mixture; a method of adding a thermally expandable filler to foam the mixture by heating; and a method of adding a silanol compound and foaming the mixture by a dehydrogenation reaction of the silanol compound with a hydrosilyl group-containing polyorganosiloxane, and the like.

Among these foaming means, a method of adding a silanol compound is preferable from the viewpoint of designing the viscoelasticity of the silicone rubber after curing to be within a suitable range. That is, the addition-curable liquid silicone rubber mixture preferably contains a silanol compound. When a solvent, a chemical blowing agent, and a thermally expandable filler are added, these additives and residues thereof are present in the cured silicone rubber in a certain amount. Therefore, the excellent recovery property from deformation of the silicone rubber may be impaired. Meanwhile, when a silanol compound is added, the silanol compound is incorporated into the cross-linked structure of the silicone rubber by the dehydrogenation reaction, and the recovery property from deformation of the silicone rubber is hardly inhibited.

When a silanol compound is added to foam the addition-curable liquid silicone rubber mixture, examples of the silanol compound used may include a compound represented by the following formula (3).

[C4]

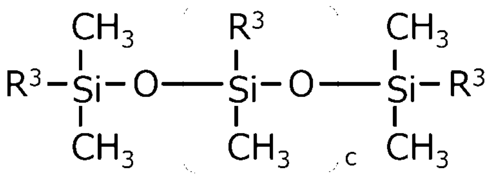

(3)

In the formula (3), $R^3$s are each independently a methyl group or a hydroxyl group, and at least two $R^3$s are hydroxyl groups. It is preferable that $1 \leq c \leq 100$, and it is more preferable that $2 \leq c \leq 20$. Preferably, $R^3$s at both ends are hydroxyl groups, and $R^3$s other than both ends are methyl groups.

In order to appropriately promote the foaming reaction and the curing reaction, the amount of hydrosilyl groups contained in the hydrosilyl group-containing polyorganosiloxane is preferably set appropriately relative to the total amount of the hydroxyl groups contained in the silanol compound and the alkenyl groups contained in the alkenyl group-containing polyorganosiloxane. Specifically, an amount in which the molar ratio of the amount of the hydrosilyl group to the total amount of the hydroxyl groups and the alkenyl groups is in the range from 1.0 to 20.0 is preferable.

For the purpose of stabilizing the foam state, the addition-curable liquid silicone rubber mixture may contain a porous inorganic filler according to need. Fine air bubbles contained in the porous inorganic filler serve as foam nuclei, thereby yielding a sponge having fine foam cells and less variation in cell size. Examples of porous inorganic filler may include at least one selected from the group consisting of zeolite, porous silica, and activated alumina. Among these, the porous inorganic filler is preferably at least one selected from the group consisting of zeolite and porous silica.

The content of porous inorganic filler in the sponge sheet is preferably 0.4 to 20 mass%, more preferably 1 to 15 mass%, based on the mass of the sponge sheet. By setting the amount of addition to the above-described lower limit or higher, the foam state can be more sufficiently stabilized. Further, by setting the amount of addition to the above-described upper limit or less, it is possible to further suppress the loss of the recovery property from deformation of the crosslinked silicone rubber due to excess filler.

The content of porous inorganic filler in the sponge sheet can be measured by the following procedures.

About 10 mg of a sample piece is collected from a sponge sheet, and the mass thereof is weighed exactly. This sample piece is placed on an alumina pan and charged into a thermogravimetric analyzer ("TGA/DSC 3+ (Mettler-Toledo International, Inc.)"), and the temperature is raised from 20°C to 600°C at a ramp rate of 20°C/min under a nitrogen atmosphere while recording mass changes of the sample piece and further held at 600°C for 5 minutes.

As a result, all organic substances contained in the sample piece, such as silicone, are decomposed and evaporated, and the porous inorganic filler and carbon black remain, so that the total mass of the porous inorganic filler and carbon black contained in the sample piece is calculated. Subsequently, the sample piece is cooled down to 20°C, then air is introduced, and the temperature is raised from 20°C to 1000°C at a ramp rate of 20°C/min and further held at 1000°C for 5 minutes. As a result, all carbon black contained in the sample piece burns, and the porous inorganic filler remains, so that the mass of the porous inorganic filler contained in the sample piece is calculated.

The number average particle diameter of the porous inorganic filler is preferably 0.1 to 10 μm and more preferably 1 to 8 μm. By setting the number average particle diameter to 0.1 μm or more, fine bubbles are likely to be contained, and a function as a foam nucleus is likely to be exhibited. Further, by setting the number average particle diameter to 10 μm or less, it is possible to further suppress the loss of the recovery property from deformation of the silicone rubber due to coarse particles. The porous inorganic filler preferably has a BET-specific surface area of 300 to 800 $m^2/g$.

The sponge sheet is preferably a cured product of an addition-curable liquid silicone rubber mixture containing at least an alkenyl group-containing polyorganosiloxane, a hydrosilyl group-containing polyorganosiloxane, a hydrosilylation catalyst, a silanol compound, and a porous inorganic filler.

The sponge sheet may contain, in addition to the cross-linked silicone rubber as a binder, additives to an extent that does not impair the effects of the present disclosure. The content ratio of the cross-linked silicone rubber in the sponge sheet is preferably 70.0 to 99.0 mass% and more preferably 80.0 to 98.0 mass%.

For example, a reaction control agent for adjusting the curing rate, fillers for increasing mechanical strength, a pigment for coloring, a plasticizer, a filler, a bulking agent, and other various additives may optionally be added as appropriate to the addition-curable liquid silicone rubber mixture during the production of a sponge sheet.

For example, carbon black may be used as the pigment. The content ratio of the carbon black in the sponge sheet is preferably 0.1 to 5 mass% and more preferably 0.5 to 2 mass%.

<1-3. Molding Method of Sponge Sheet>

Methods of forming sponge sheets are not particularly limited, but include, for example, slab molding. In this molding method, a frame mold that is larger than the dimensions of the sponge sheet is prepared, then the raw materials of a sponge sheet are poured into this frame mold, and the raw materials are foamed and cured to yield sponge mass. The sponge sheet with the target dimension is obtained by appropriately cutting and slicing the produced sponge mass.

<1-4. Evaluation of Foam State of Sponge Sheet>

The foam state of the sponge sheet can be evaluated by the following procedures. First, the sponge sheet is observed using an optical microscope or the like, and the observed image is stored. The obtained observation image is subjected to binary processing to detect the aperture portions of the cells of the sponge, and the area of each aperture is calculated. From the obtained area of each aperture, the percentage of the total area of the apertures included in the observation region, the average of the areas of the apertures, and the largest area B out of the areas of the apertures are determined. Specific procedures will be described later.

<2-1. Shape of Solid Rubber Sheet>

Fig. 4 is a schematic view illustrating a cross-section of the solid rubber sheet. In the solid rubber sheet 2, a plurality of protrusions 4 are formed on a surface Ssr 9 on the side facing the sponge sheet, where the protrusions 4 are cylindrical. The diameter 10 of the protrusions, the distance 11 between the adjacent protrusions, the height 12 of the protrusions, and the thickness 13 of the solid rubber sheet are regulated in the "THE ITTF QUALITY PROGRAMME FOR RACKET COVERINGS - MANUAL" issued by the International Table Tennis Federation, and a shape satisfying this regulation is preferable.

Specifically, the diameter of the protrusion is preferably 1.0 to 2.0 mm. The distance (shortest distance) between adjacent protrusions is preferably 0.5 to 1.0 mm. The height of the protrusion is preferably 0.5 to 1.5 mm. The thickness of the solid rubber sheet is preferably 1.5 to 2.0 mm.

Fig. 5 is a schematic view of the surface Ssr of the solid rubber sheet in plan view. A plurality of cylindrical projections 4 are formed on the solid rubber sheet 2. The standard deviation of the distance 11 (shortest distance) between adjacent protrusions is preferably 0.000 to 0.050 mm, more preferably 0.000 to 0.010 mm, and even more preferably 0.000 mm. It is preferable that the protrusions are adjacent to each other, with one protrusion equally spaced to six protrusions, as illustrated in Fig. 5. For example, a form in which one protrusion is adjacent to six protrusions at a distance with the above standard deviation is preferable. The distance 11 between adjacent protrusions is particularly preferably equal to all of the six adjacent protrusions.

The protrusions 4 are present at a density of 10 to 30 protrusions per $cm^2$ unit area. It is preferable that the density of the protrusions 4 is 15 to 25 protrusions per $cm^2$ unit area. With the above range, it is easy to exhibit stable hit ball performance and suppress the delamination between the solid rubber sheet and the sponge sheet.

<2-2. Constituent Materials of Solid Rubber Sheet>

The material constituting the solid rubber sheet 3 is preferably a material excellent in flexibility and a recovery

property from deformation. Examples of such materials may include silicone rubber, natural rubber, isoprene rubber, butadiene rubber, chloroprene rubber, butyl rubber, urethane rubber, and the like. Among them, silicone rubber is preferable from the viewpoint of low change due to temperatures. Examples of silicone rubber may include a cured product of an addition-curable liquid silicone rubber composition.

The addition-curable liquid silicone rubber mixture contains, for example, an alkenyl group-containing polyorganosiloxane, a hydrosilyl group-containing polyorganosiloxane, and a hydrosilylation catalyst. An addition-curable liquid silicone rubber mixture contains an alkenyl group-containing polyorganosiloxane, a hydrosilyl group-containing polyorganosiloxane, a hydrosilylation catalyst, and a porous inorganic filler. The alkenyl group-containing polyorganosiloxane, the hydrosilyl group-containing polyorganosiloxane, the hydrosilylation catalyst, and the porous inorganic filler used may be the same as those exemplified as those that may be used in the sponge sheet described above.

A reaction control agent for adjusting the curing rate, fillers for increasing mechanical strength, a pigment for coloring, a plasticizer, a filler, a bulking agent, and other various additives may optionally be added as appropriate to the addition-curable liquid silicone mixture.

<2-3. Method for Molding Solid Rubber Sheet>

Methods for molding the solid rubber sheet are not particularly limited, and die molding using a hot press machine may be exemplified as an example. The solid rubber sheet is, for example, a molded body molded using a mold. In this molding method, for example, a method of molding using a two-body mold 14 consisting of a lower mold 15 and an upper mold 16, as illustrated in Fig. 6, may be exemplified. The lower mold 15 is provided with a plurality of recesses 17 in order to form protrusions on the solid rubber sheet.

The protrusion shape of the solid rubber sheet is regulated in the "THE ITTF QUALITY PROGRAMME FOR RACKET COVERINGS - MANUAL" issued by the International Table Tennis Federation, and it is preferable to determine the shape and arrangement of the recesses 17 so that a protrusion shape in accordance with this regulation be formed.

At the time of molding, a necessary amount of materials is placed on the lower mold 15, the upper mold 16 is overlayed from above, and the solid rubber sheet is molded by sufficiently heating and pressurizing the dies with a hot press machine.

<3. Bonding between Sponge Sheet and Solid Rubber Sheet>

The method of bonding the sponge sheet to the solid rubber sheet is not particularly limited, and examples of methods may include a method of applying an adhesive such as a modified silicone adhesive or a cyanoacrylate adhesive and bonding the sponge sheet to the solid rubber sheet. Among these, the silicone-based adhesive is preferable because the adhesive layer has a moderate elasticity, which prevents cohesive failure within the adhesive layer when the ball is hit. That is, the sponge sheet and the solid rubber sheet are preferably bonded to each other with an adhesive and are more preferably bonded to each other with a silicone-based adhesive.

<Table Tennis Racket>

At least one aspect of the present disclosure relates to a table tennis racket. The table tennis racket is provided with a racket main body and a table tennis rubber sheet attached to at least one surface of the racket main body, and the table tennis rubber sheet is the table tennis rubber sheet described above. The surface of the sponge sheet on the side opposite to the surface on the side facing the solid rubber sheet is attached to the surface of the racket main body.

The table tennis rubber sheets may be attached to both sides of the racket main body. The method of bonding the table tennis rubber sheet to the racket main body is not particularly limited, and a known method may be employed. For example, a known adhesive for table tennis rackets may be used. Furthermore, the shape of the racket main body is not particularly limited, and a known one may be used.

[Examples]

Several aspects of the present invention will be described in more detail below with reference to specific examples of table tennis rubber sheets and table tennis rackets.

(Example 1)

[Molding of Sponge Sheet]

First, 500.0 g of a vinyl group-containing polyorganosiloxane, "DMS-V46 (manufactured by Gelest Inc.)", 300.0 g

of a vinyl group-containing polyorganosiloxane "VDT-431 (manufactured by Gelest Inc.)", 12.5 g of a silanol compound "DMS-S12 (manufactured by Gelest Inc.)", 0.5 g of a platinum catalyst "3% Pt-VTS-VTS solution (manufactured by N.E. Chemcat Corp.)", 10.0 g of carbon black "Denka Black, powder (manufactured by Denka Company)", and 52.0 g of zeolite "High-silica zeolite HSZ-320 HOA (manufactured by Tosoh Corp.)" were weighed, and then stirred sufficiently using a planetary centrifugal mixer "AR-250 (manufactured by THINKY Corp.)" to give a homogeneous mixture.

To the resulting mixture, 154.3 g of a hydrosilyl group-containing polyorganosiloxane, "HMS-992 (manufactured by Gelest Inc.)", was added, and the mixture was sufficiently stirred again using a planetary centrifugal mixer to yield a homogeneous mixture. The resulting mixture was poured into a square-shaped Teflon (registered trademark) tray of 25 cm in length, 25 cm in width, and 5 cm in depth, and allowed to stand at room temperature overnight to foam and cure sufficiently. The resulting foam was removed from the Teflon (registered trademark) tray and sliced using a band machine slicer "NP-350 (manufactured by Nippy Kikai Co., Ltd.)" to give a sponge sheet 1 of 2.0 mm thickness.

[Evaluation of Foam State of Sponge Sheet]

The obtained sponge sheet 1 was observed using a digital microscope, "VHX-500 (manufactured by Keyence Corp.)", at any position that would be the surface Ssp, and an observation image with a magnification of 20 times was taken. A square observation region 1 having a length of 10 mm on one side was extracted from any position of the obtained image, and the image was subjected to binary processing on the observation region 1 to obtain a binary image in which the backbone of the foam cells of the sponge sheet was colored white and the apertures of the foam cells were colored black.

For the binary processing, image analysis software ("ImageProPlus" (trade name), manufactured by Media Cybernetics, Inc.) was used to calculate the area by the following procedures.

The "Count/Size" and then the "Options" are selected sequentially from the "Measurement" of the toolbar to set the binarization condition. Among the object extraction options, 8 concatenations are selected, and the smoothing is set to 0. Next, the rectangular ROI is selected from the "Measurement" of the toolbar to enclose the aperture of the foam cell, and the "Automatically extracting dark colored objects" is performed to binarize. The area can be obtained in a pixel unit by selecting the "Measurement data" from the "Display" of the toolbar. From the relationship of length per pixel of the observed image, the area of the aperture is obtained.

From this binary image, all the areas of the apertures present in the observation region 1 were calculated. On the basis of this data, the percentage of the total area of the apertures to the area of the observation region 1 was calculated, and the calculated value was defined as "the percentage of the total area of the apertures" in the observation region 1. Also, an arithmetic mean value of the areas of all observed apertures was calculated, and the calculated value was defined as the "average of the areas of the apertures" in the observation region 1. The largest area out of the areas of all observed apertures was defined as "area B" in the observation region 1.

By repeating the above-described procedures 10 times in total with respect to any position of the sponge sheet 1 so that the observation regions do not overlap each other, the "percentage of the total area of the aperture", the "average of the areas of the apertures", and the "area B" were calculated at 10 positions in total in the observation regions 1 to 10.

An arithmetic mean value of "the percentage of the total area of the apertures" in the obtained observation regions 1 to 10 was calculated, and the calculated value was defined as "the percentage of the total area of the apertures" of the sponge sheet 1. An arithmetic mean value of "the average of the areas of the apertures" in the obtained observation regions 1 to 10 was calculated, and the calculated value was defined as "the average of the areas of the apertures" of the sponge sheet 1. The maximum value of the "area B" of the obtained observation regions 1 to 10 was determined and used as the "area B" of the sponge sheet 1.

The above measurement can also be performed by exposing the surface Ssp from a table tennis rubber sheet in which a sponge sheet and a solid rubber sheet are laminated. In this case, the surface Ssp may be exposed by the following means. A square having a length of 10 mm on one side is cut out from the table tennis rubber sheet. For the cut-out sample pieces, the solid rubber sheet is shaved off using a microtome while cooling with liquid nitrogen. At this time, the thickness of cutting per time is appropriately adjusted so as not to shave off up to the sponge sheet, and all the solid rubber sheet is shaved off to expose the surface Ssp.

[Molding of Solid Rubber Sheet]

First, 200.0 g of a vinyl group-containing polyorganosiloxane, "DMS-V31 (manufactured by Gelest Inc.)", 0.1 g of a platinum catalyst, "3% Pt-VTS-VTS solution (manufactured by N.E. Chemcat Corp.)", 0.1 g of a reaction control agent, "1-ethynyl-1-cyclohexanol (manufactured by Tokyo Chemical Industry Co., Ltd.)", 1.0 g of carbon black, "Denka Black, powder (manufactured by Denka Company)", and 25.0 g of silica "AEROSIL R976S, (manufactured by NIPPON AEROSIL Co., Ltd.)" were weighed, and then stirred sufficiently using a planetary centrifugal mixer, "AR-250 (THINKY Corp.)" to give a homogeneous mixture.

To the resulting mixture, 6.0 g of the hydrosilyl group-containing polyorganosiloxane, "HMS-992 (manufactured

by Gelest Inc.)", was added, and the mixture was sufficiently stirred again using a planetary centrifugal mixer to yield a homogeneous mixture. A required amount of the above mixture was placed on the lower mold 15 of the mold illustrated in Fig. 6, then the upper mold 16 was overlayed, and the dies were pressed with a load of 10 MPa for 10 minutes using a hot press machine (KANSAI ROLL Co., Ltd.) with a hot plate heated to 120°C. After that, the mold was taken out and cooled to room temperature, then the upper and lower molds were separated, and a cured rubber sheet was taken out. On the resulting solid rubber sheet, a plurality of cylindrical protrusions 4 were formed, as illustrated in Fig. 4 (cross-sectional view) and Fig. 5 (bottom view).

With respect to the resulting solid rubber sheet, the cross-section and the lower surface (surface with a plurality of protrusions) that would be the surface Ssr were observed using a digital microscope, "VHX-500 (manufactured by KEYENCE Corp.)", and an observed image of 20 times magnification was taken. The number (density) of protrusions per $cm^2$ unit area of the surface Ssr was calculated from the observed image of this cross-section. Further, the height 12 of the protrusions and the thickness 13 of the solid rubber sheet illustrated in Fig. 4 were determined.

The number (density) of protrusions per $cm^2$ unit area of the surface Ssr can be calculated by the following equation (1).

(The number (density) of protrusions per $cm^2$ unit area) = 1/{(distance [mm] between centers of two adjacent protrusions)$^2$ $\times$ $\sqrt{3}/2$} $\times$ 100 (Equation 1):

As for the calculation procedures, first, all the distances between the centers of two adjacent protrusions were measured in the field of view of the observation image of the lower surface that would be the surface Ssr, and the average thereof was calculated. The average was 2.35 mm. The number (density) of the protrusions was calculated by assigning this average to Equation 1. The result of the calculation was found to be 20.9 protrusions.

The value of the height 12 of the protrusion was 0.950 mm, and the value of the thickness 13 of the solid rubber sheet was 1.800 mm. Furthermore, from the observation image of the lower surface that would be the surface Ssr, the diameter 10 of the cylindrical protrusion, the distance 11 between the adjacent protrusions, and the area of the bottom surface of the cylindrical protrusion illustrated in Fig. 5 were calculated. The value of the diameter 10 of the protrusions was 1.690 mm, and the value of the distance 11 between adjacent protrusions was 0.560 mm. Also, the sizes of all the cylindrical protrusions observed were uniform, and the area of the bottom surface was 2.242 $mm^2$. The area of this bottom surface corresponds to the area A.

The above measurement can also be performed with the surface Ssr of the solid rubber sheet exposed from the table tennis rubber sheet. In this case, the surface Ssr may be exposed by the following means. A square having a length of 10 mm on one side is cut out from the table tennis rubber sheet. For the cut-out sample pieces, the sponge sheet is shaved off using a microtome while cooling with liquid nitrogen. At this time, the thickness of cutting per time is appropriately adjusted so as not to shave off up to the solid rubber sheet, and all the sponge sheet is shaved off to expose the surface Ssr.

[Bonding between Sponge Sheet and Solid Rubber Sheet]

Silicone rubber adhesive, "KE-348-T (manufactured by Shin-Etsu Chemical Co., Ltd.)", was applied thinly on the bottom surface of the cylindrical protrusion of the solid rubber sheet, and two layers of the solid rubber sheet and the sponge sheet 1 were superimposed so that the bottom surface be in contact with the sponge sheet 1. In this state, two layers were placed on a flat metal plate, and further, a 1-kg weight flat metal plate was placed from above and left in an oven at 80°C for 10 hours to obtain a table tennis rubber sheet 1 with the sponge sheet 1 and the solid rubber sheet bonded together.

[Attachment of Rubber Sheet to Table Tennis Rackets]

An adhesive for table tennis rackets, "FINEZIP" (manufactured by NIPPON TAKKYU Co., Ltd.), was applied thinly onto the sponge sheet surface of the table tennis rubber sheet 1 described above and the blade portion of a table tennis racket, "Korbel (manufactured by Tamasu Co., Ltd.)". After drying at room temperature for about 30 minutes, the adhesive-coated surfaces of the table tennis rubber sheet 1 and the blade portion were attached together and bonded sufficiently at room temperature overnight. After the bonding, the portion of the table tennis rubber sheet 1 protruding from the blade portion of the racket was cut off with scissors to obtain a table tennis racket 1.

[Evaluation of Hit Ball Performance under Room Temperature]

An environment at a temperature of 23°C and a relative humidity of 55% was set as the room temperature environment. Hit ball performance was evaluated under this room temperature. The procedures will be described with

reference to Fig. 7. A table tennis racket 19 was attached to the metal plate 18, and the metal plate 18 was fixed at an angle of 45° with respect to the horizontal table 20. Further, a ping-pong ball ejection port 21 of a table tennis robot, "Y-M-07 (manufactured by YASAKA Corp.)", was placed at a position where the distance from the center of the table tennis racket was 13 cm.

A no-spin ping-pong ball 22 at a ball speed of 8.6 m/second was horizontally ejected from the ping-pong ball ejection port 21 toward the center of the table tennis racket 19, and the state of a ping-pong ball bouncing off the table tennis racket 19 was captured using a high-speed microscope, "VW-900 (manufactured by Keyence Corp.)", at a shutter speed of 1/8000 seconds and a frame rate of 4000 fps. From the obtained captured image, 32 frames (elapsed time of 0.008 seconds) were each extracted before and after the ping-pong ball hit the table tennis racket, and the ball speed before and after the ping-pong ball hit the table tennis racket was determined on the basis of the distance that the ping pong ball moved during these 32 frames. On the basis of these ball speeds, a speed maintenance ratio was calculated by the following equation 2.

(Speed maintenance ratio [%]) = (ball speed before a ball hit a table tennis racket [mm/second])/(ball speed after a ball hit a table tennis racket [mm/second]) (Equation 2):

The spinning speed was determined by the following equation 3 based on the angle at which the ping-pong ball was spun in 32 frames (elapsed time of 0.008 seconds) after the ping-pong ball hit the table tennis racket.

(Spinning speed [rps]) = (spinning angle [deg] for 0.008 seconds)/(0.008 [seconds] × 360 [deg]) (Equation 3):

[Evaluation of Hit Ball Performance under Higher Temperature]

As a higher temperature environment, an environment with a temperature of 30°C and a relative humidity of 80% was set. Under this higher temperature, the hit ball performance was evaluated in the same procedures as the evaluation of the hit ball performance under room temperature.

[Evaluation of Hit Ball Performance under Lower Temperature]

As a lower temperature environment, an environment with a temperature of 15°C and a relative humidity of 10% was set. Under this lower temperature, the hit ball performance was evaluated in the same procedures as the hit ball performance evaluation under room temperature.

[Evaluation of Bonding Performance]

Under room temperature, the action of hitting a ping-pong ball to the center of a table tennis racket performed in the hit ball performance evaluation described above was repeated a total of 5000 times. Thereafter, the table tennis rubber sheet was peeled off from the table tennis racket, and a sample for evaluating bonding was cut out to a 5 cm × 5 cm square from the central portion of the rubber sheet. Regarding this sample for evaluating bonding, the solid rubber sheet 2 and the sponge sheet 3 were separated, as illustrated in Fig. 8, by cutting the protrusions 4 of the solid rubber sheet 2 along the cutting line 23 using a razor. For the separated sponge sheet 3, the surface bonded with the solid rubber sheet 2 was observed, then the number of protrusions being bonded with the sponge sheet 3 and the number of delaminated protrusions were counted, and the bonding performance was ranked on the basis of the following criteria.

Rank A: All protrusions remain bonded.
Rank B: Of all protrusions, 99% or more remain bonded.
Rank C: Of all protrusions, 90% or more and less than 99% remain bonded.
Rank D: Of all protrusions, less than 90% remain bonded.

(Examples 2 to 10)

Sponge sheets 2 to 10 were prepared in the same manner as in Example 1, except that the materials used for the sponge sheet were changed, as listed in Table 1 below. Table tennis rackets 2 to 10 were prepared from the resulting sponge sheets 2 to 10 in the same procedures as in Example 1, respectively, and similar evaluations were performed. Table 2 shows these results.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Sponge sheet No. | | Sponge sheet 1 | Sponge sheet 2 | Sponge sheet 3 | Sponge sheet 4 | Sponge sheet 5 | Sponge sheet 6 | Sponge sheet 7 | Sponge sheet 8 | Sponge sheet 9 | Sponge sheet 10 |
| Vinyl group-containing polyorganosiloxane | DMS-V46 (Manufactured by Galest Inc.) | 500.0g | 500.0g | 500.0g | 500.0g | 500.0g | 500.0g | 500.0g | 500.0g | 500.0g | 500.0g |
| | VDT-431 (Manufactured by Galest Inc.) | 300.0g | 300.0g | 300.0g | 300.0g | 300.0g | 300.0g | 300.0g | 300.0g | 300.0g | 300.0g |
| Hydrosilyl group-containing polyorganosiloxane | HMS-992 (Manufactured by Galest Inc.) | 154.3g | 154.3g | 154.3g | 154.3g | 154.3g | 130.4g | 127.4g | 166.2g | 154.3g | 154.3g |
| Silanol | DMS-S12 (Manufactured by Galest Inc.) | 12.5g | 12.5g | 12.5g | 12.5g | 12.5g | 2.5g | 1.3g | 17.5g | 12.5g | 12.5g |
| Platinum catalyst | 3% Pt-VTS-VTS solution (Manufactured by N.E. Chemcat Corp.) | 0.5g | 0.5g | 0.5g | 0.5g | 0.5g | 0.5g | 0.5g | 0.5g | 0.5g | 0.5g |
| Carbon black | Denka Black, powder (Manufactured by Denka Company) | 10.0g | 10.0g | 10.0g | 10.0g | 10.0g | 10.0g | 10.0g | 10.0g | 10.0g | 10.0g |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Sponge sheet No. | | Sponge sheet 1 | Sponge sheet 2 | Sponge sheet 3 | Sponge sheet 4 | Sponge sheet 5 | Sponge sheet 6 | Sponge sheet 7 | Sponge sheet 8 | Sponge sheet 9 | Sponge sheet 10 |
| Porous inorganic filler | Zeolite HSZ-320 HOA (Manufactured by Tosoh Corp.) | 52.0g | - | 172.0g | 10.0g | - | 166.4g | 52.0g | 52.0g | 4.9g | 244.0g |
| | Porous silica SUNSPHERE H-33 (Manufactured by AGC Si-Tech Co., Ltd.) | - | 52.0g | - | - | - | - | - | - | - | - |
| | Activated alumina AA-101 (Manufactured by Nippon Light Metal Co., Ltd.) | - | - | - | - | 52.0g | - | - | - | - | - |

[Table 2]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Table tennis racket No. | | 1 | 2 | 3 | 4 | 5 | 6 | 7 | 8 | 9 | 10 |
| Sponge sheet | Percentage of total area of apertures [%] | 35.0 | 37.2 | 33.2 | 40.4 | 38.7 | 23.1 | 20.0 | 49.8 | 41.3 | 22.5 |
| | Average of areas of apertures [$mm^2$] | 0.126 | 0.118 | 0.053 | 0.196 | 0.131 | 0.008 | 0.036 | 0.179 | 0.255 | 0.005 |
| | Area B [$mm^2$] | 0.400 | 0.423 | 0.156 | 1.001 | 0.741 | 0.024 | 0.284 | 0.533 | 1.117 | 0.012 |
| Solid rubber sheet | Area A [$mm^2$] | 2.242 | 2.242 | 2.242 | 2.242 | 2.242 | 2.242 | 2.242 | 2.242 | 2.242 | 2.242 |
| B/A | | 0.178 | 0.189 | 0.070 | 0.446 | 0.331 | 0.011 | 0.127 | 0.238 | 0.498 | 0.005 |
| Hit ball performance at room temperature | Speed maintenance ratio [%] | 622% | 61.6% | 64.1% | 60.8% | 61.8% | 64.0% | 65.3% | 59.7% | 60.2% | 65.6% |
| | Spinning speed [rps] | 54.1 | 53.9 | 50.3 | 56.1 | 53.5 | 50.3 | 50.6 | 55.9 | 54.8 | 48.8 |
| Hit ball performance at higher temperature | Speed maintenance ratio [%] | 62.5% | 61.7% | 64.1% | 60.5% | 61.2% | 64.1% | 65.3% | 59.4% | 60.3% | 652% |
| | Spinning speed [rps] | 53.6 | 53.4 | 50.3 | 56.0 | 53.3 | 50.1 | 50.5 | 53.5 | 54.8 | 46.1 |
| Hit ball performance at lower temperature | Speed maintenance ratio [%] | 622% | 61.8% | 64.0% | 60.7% | 62.0% | 64.0% | 65.5% | 60.5% | 60.5% | 65.9% |
| | Spinning speed [rps] | 54.7 | 54.4 | 50.9 | 56.3 | 53.9 | 51.0 | 50.8 | 56.2 | 55.0 | 49.2 |
| Evaluation of bonding performance | Number of protrusions remaining bonded [number] | 500 | 500 | 500 | 500 | 500 | 500 | 500 | 496 | 495 | 500 |
| | Number of protrusions delaminated [number] | 0 | 0 | 0 | 0 | 0 | 0 | 0 | 4 | 5 | 0 |
| | Percentage of protrusions remaining bonded [%] | 100% | 100% | 100% | 100% | 100% | 100% | 100% | 99.2% | 99.0% | 100% |
| | Rank of bonding performance | A | A | A | A | A | A | A | B | B | A |

In the tables, B/A indicates the ratio of area B/area A.

(Comparative Examples 1 to 3)

Sponge sheets 11 to 13 were prepared in the same manner as in Example 1, except that the materials used for the sponge sheet were changed, as listed in Table 3 below. Table tennis rackets 11 to 13 were respectively prepared for the resulting sponge sheets 11 to 13 in the same procedures as in Example 1, and similar evaluations were performed. Table 4 shows these results.

(Comparative Example 4)

As a table tennis rubber sheet, a rubber sheet, "SRIVER (sheet color: black, sponge thickness: super thick, manufactured by Tamasu Co., Ltd.)", was used. This rubber sheet was a rubber sheet containing no crosslinked silicone rubber in a sponge sheet. This rubber sheet was attached to a table tennis racket, "Korbel (manufactured by Tamasu Co., Ltd.)", in the same procedures as in Example 1 to produce a table tennis racket 14, and the same evaluation was performed. Table 4 shows these results.

[Table 3]

| | | Comparative Example 1 | Comparative Example 2 | Comparative Example 3 |
|---|---|---|---|---|
| Sponge sheet No. | | Sponge sheet 11 | Sponge sheet 12 | Sponge sheet 13 |
| Vinyl group-containing polyorganosiloxane | DMS-V46 (Manufactured by Galest Inc.) | 500.0g | 500.0g | 500.0g |
| | VDT-431 (Manufactured by Galest Inc.) | 300.0g | 300.0g | 300.0g |
| Hydrosilyl group-containing polyorganosiloxane | HMS-992 (Manufactured by Galest Inc.) | 154.3g | 184.1g | 125.6g |
| Silanol | DMS-S12 (Manufactured by Galest Inc.) | 12.5g | 25.0g | 0.5g |
| Platinum catalyst | 3% Pt-VTS-VTS solution (Manufactured by N.E. Chemcat Corp.) | 0.5g | 0.5g | 0.5g |
| Carbon black | Denka Black, powder (Manufactured by Denka Company) | 10.0g | 10.0g | 10.0g |
| Porous inorganic filler | Zeolite HSZ-320 HOA (Manufactured by Tosoh Corp.) | - | 52.0g | 52.0g |
| | Porous silica SUNSPHERE H-33 (Manufactured by AGC Si-Tech Co., Ltd.) | - | - | - |
| | Activated alumina AA-101 (Manufactured by Nippon Light Metal Co., Ltd.) | - | - | - |

[Table 4]

| | | Comparative Example 1 | Comparative Example 2 | Comparative Example 3 | Comparative Example 4 |
|---|---|---|---|---|---|
| Table tennis racket No. | | Table tennis racket 11 | Table tennis racket 12 | Table tennis racket 13 | Table tennis racket 14 |
| Sponge sheet | Percentage of total area of apertures [%] | 43.4 | 61.5 | 11.4 | 56.5 |
| | Average of areas of apertures [mm$^2$] | 0.271 | 0.192 | 0.030 | 0.020 |
| | Area B [mm$^2$] | 1.298 | 0.714 | 0.278 | 0.056 |
| Solid rubber sheet | Area A[mm$^2$] | 2.242 | 2.242 | 2.242 | 2.242 |
| B/A | | 0.579 | 0.318 | 0.124 | 0.025 |
| Hit ball performance at room temperature | Speed maintenance ratio [%] | 57.0% | 55.3% | 66.4% | 54.2% |
| | Spinning speed [rps] | 55.5 | 55.4 | 37.1 | 51.3 |
| Hit ball performance at higher temperature | Speed maintenance ratio [%] | 56.7% | 54.1% | 66.1% | 54.0% |
| | Spinning speed [rps] | 55.1 | 51.8 | 37.0 | 38.6 |
| Hit ball performance at lower temperature | Speed maintenance ratio [%] | 57.1% | 56.9% | 66.5% | 55.3% |
| | Spinning speed [rps] | 55.6 | 56.5 | 38.2 | 52.5 |
| Evaluation of bonding performance | Number of protrusions remaining bonded [number] | 184 | 92 | 500 | 500 |
| | Number of protrusions delaminated [number] | 316 | 408 | 0 | 0 |
| | Percentage of protrusions remaining bonded [%] | 36.8% | 18.4% | 100% | 100% |
| | Rank of bonding performance | D | D | A | A |

As shown in Table 2, it was found that the use of the table tennis rackets according to Examples 1 to 10 exhibited stable hit ball performance independently of temperature changes and could suppress the delamination between the solid rubber sheet and the sponge sheet.

Meanwhile, Comparative Example 1, in which the B/A value was 0.500 or more, and Comparative Example 2, in which the percentage of the total area of the apertures was more than 50.0%, resulted in poor bonding performance. Comparative example 3, in which the percentage of the total area of the apertures was 20.0% or less, showed particularly poor spinning speed in hit ball performance. Comparative example 4, in which the sponge sheet contained no crosslinked silicone rubber, resulted in poor spinning speed under a higher temperature.

While the present disclosure has been described with reference to exemplary embodiments, it is to be understood that the present disclosure is not limited to the disclosed exemplary embodiments. The scope of the following claims is to be accorded the broadest interpretation so as to encompass all such modifications and equivalent structures and functions.

The present application claims priority based on Japanese Patent Application No. 2022-212453 filed on December 28, 2022, the entire contents of which are incorporated herein by reference.

## Claims

1. **1.** A table tennis rubber sheet comprising:

   a sponge sheet; and
   a solid rubber sheet laminated on one surface of the sponge sheet, wherein
   the sponge sheet comprises a crosslinked silicone rubber as a binder;
   the sponge sheet has a plurality of apertures on a surface Ssp on a side facing the solid rubber sheet;
   the solid rubber sheet has a plurality of protrusions on a surface Ssr on a side facing the surface Ssp;
   the protrusions are present at a density of 10 to 30 protrusions per $cm^2$ unit area of the surface Ssr;
   each of the protrusions has a facing surface facing the surface Ssp;
   each facing surface of the protrusions is in contact with the surface Ssp of the sponge sheet directly or via an adhesive; and
   when 10 square observation regions each having a length of 10 mm on one side are placed on the surface Ssp of the sponge sheet so that the observation regions do not overlap each other,

      each of the observation regions includes a plurality of the apertures, and
      an average of percentages of total areas of the apertures included in each of the observation regions to the area of each of the observation regions is 20.0 to 50.0%; and
      when the smallest area out of areas of the facing surface of each of the protrusions in contact with the surface Ssp is defined as area A, and the largest area out of areas of the apertures in each of the observation regions is defined as area B, the area A and the area B satisfy the following formula (I):

$$\text{area B/area A} < 0.500 \;...\; (I).$$

2. **2.** The table tennis rubber sheet according to claim 1, wherein
   an average of areas of the apertures included in each of the observation regions is 0.008 to 0.200 $mm^2$.

3. **3.** The table tennis rubber sheet according to claim 1 or 2, wherein

   the sponge sheet further comprises a porous inorganic filler, and
   a content of the porous inorganic filler is 1 to 15 mass% based on a mass of the sponge sheet.

4. **4.** The table tennis rubber sheet according to claim 3, wherein
   the porous inorganic filler is at least one selected from the group consisting of a zeolite and porous silica.

5. **5.** The table tennis rubber sheet according to any one of claims 1 to 4, wherein
   the sponge sheet is a cured product of an addition-curable liquid silicone rubber mixture containing at least an alkenyl group-containing polyorganosiloxane, a hydrosilyl group-containing polyorganosiloxane, a hydrosilylation catalyst, a silanol compound, and a porous inorganic filler.

6. **6.** A table tennis racket comprising:

   a racket main body; and
   a table tennis rubber sheet attached to at least one surface of the racket main body, wherein
   the table tennis rubber sheet is the table tennis rubber sheet according to any one of claims 1 to 5, and
   a surface of the sponge sheet on a side opposite to a surface on a side facing the solid rubber sheet of the sponge sheet is attached to the surface of the racket main body.

7. **7.** A table tennis rubber sheet comprising:

   a sponge sheet; and
   a solid rubber sheet laminated on one surface of the sponge sheet, wherein
   the sponge sheet comprises a crosslinked silicone rubber as a binder;
   the sponge sheet has a plurality of apertures on a side facing the solid rubber sheet;
   the solid rubber sheet has a plurality of protrusions on a side facing the sponge sheet;
   the protrusions are present at a density of 10 to 30 protrusions per $cm^2$ unit area in a plan view on a side of the solid

rubber sheet facing the sponge sheet;
each of the protrusions has a facing surface facing the sponge sheet on a side opposite to the solid rubber sheet;
each facing surface of the protrusions is in contact with the sponge sheet on a side facing the solid rubber sheet directly or via an adhesive; and
when 10 square observation regions each having a length of 10 mm on one side are placed so that the observation regions do not overlap each other in a plan view on a side of the sponge sheet facing the solid rubber sheet,

each of the observation regions include a plurality of the apertures,
an average of percentages of total areas of the apertures included in each of the observation regions to an area of each of the observation regions is 20.0 to 50.0%; and
when the smallest area out of areas of the facing surfaces of each of the protrusions in contact with a side of the sponge sheet facing the solid rubber sheet is defined as area A, and the largest area out of areas of the apertures in each of the observation regions is defined as area B, the area A and the area B satisfy the following formula (I):

$$\text{area B}/\text{area A} < 0.500 \quad \ldots \text{(I)}.$$

Fig. 1A

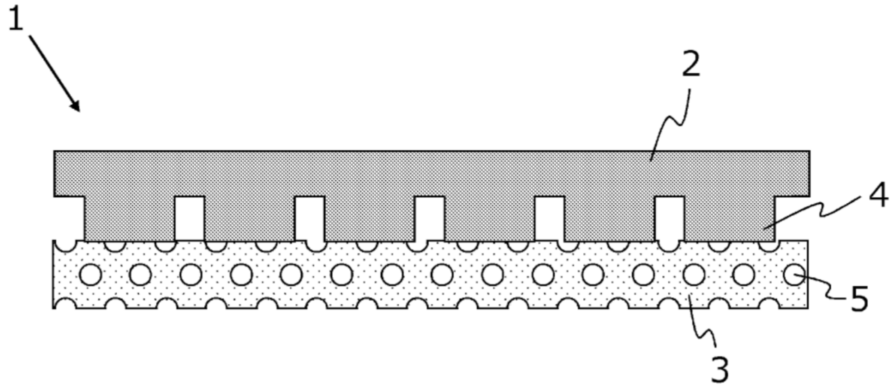


Fig. 1B

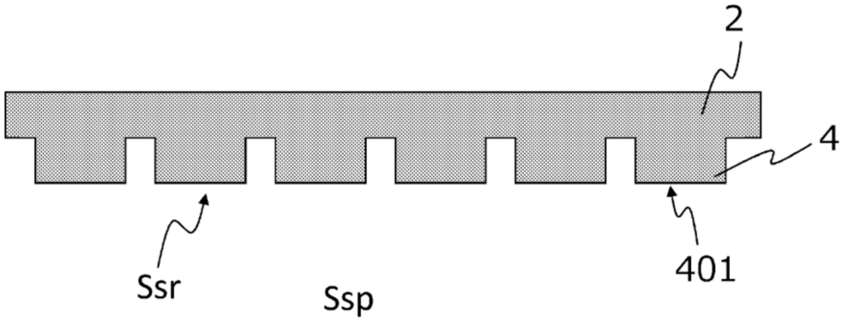


Fig. 1C

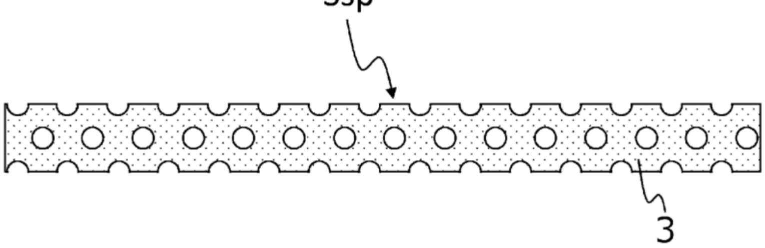

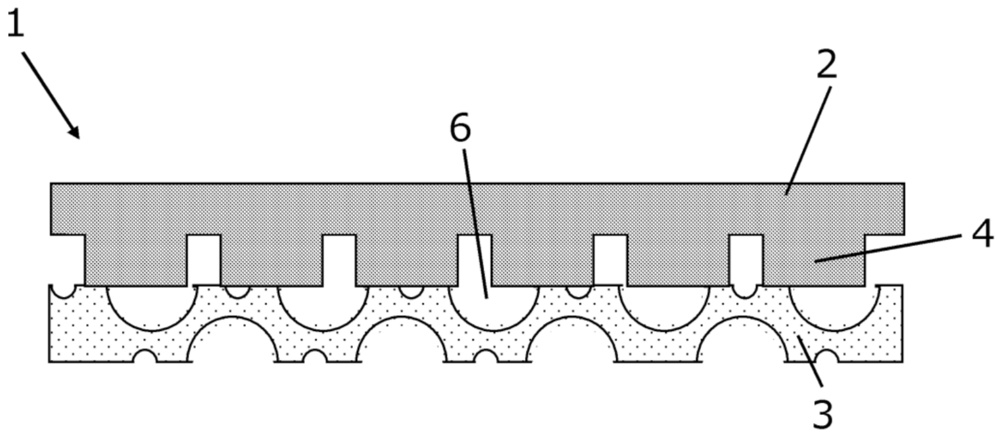


Fig. 2

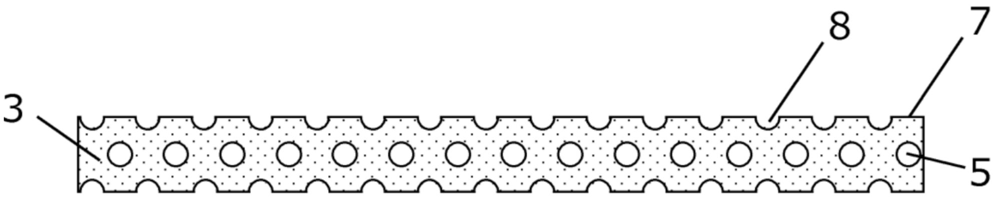


Fig. 3

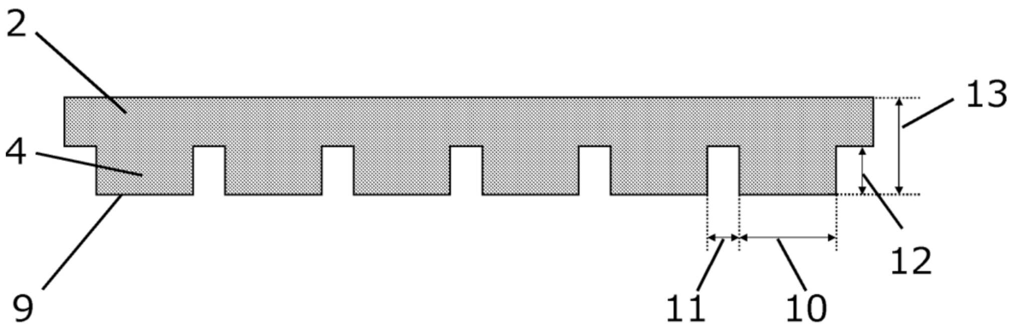


Fig. 4

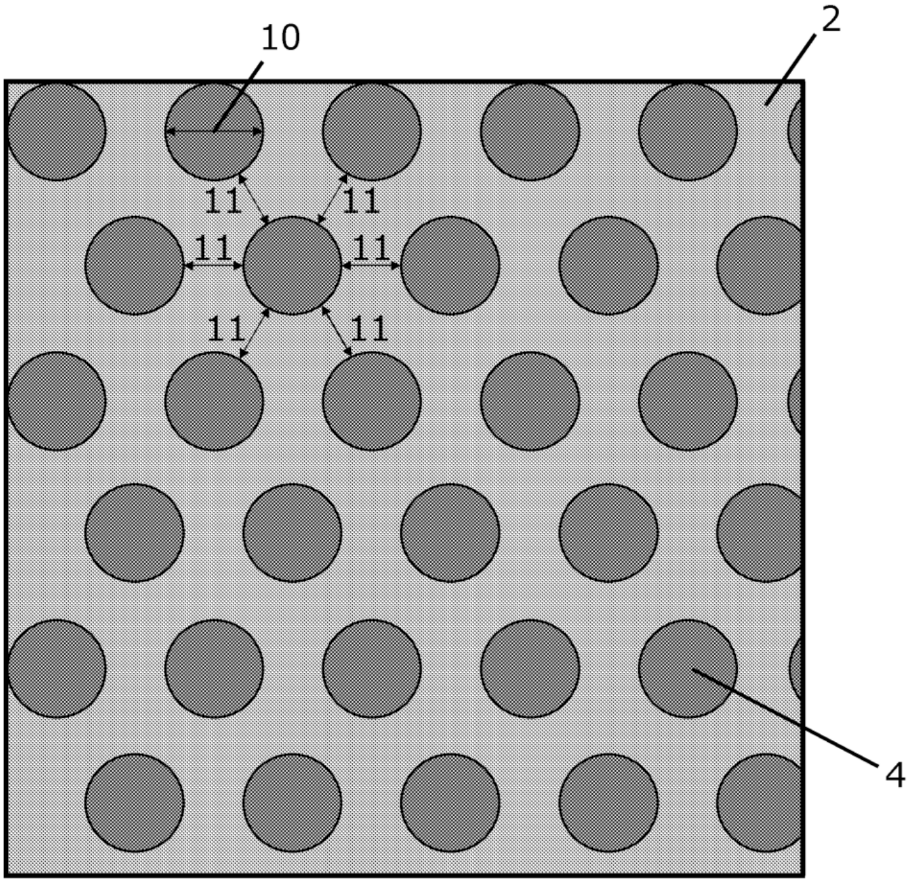


Fig. 5

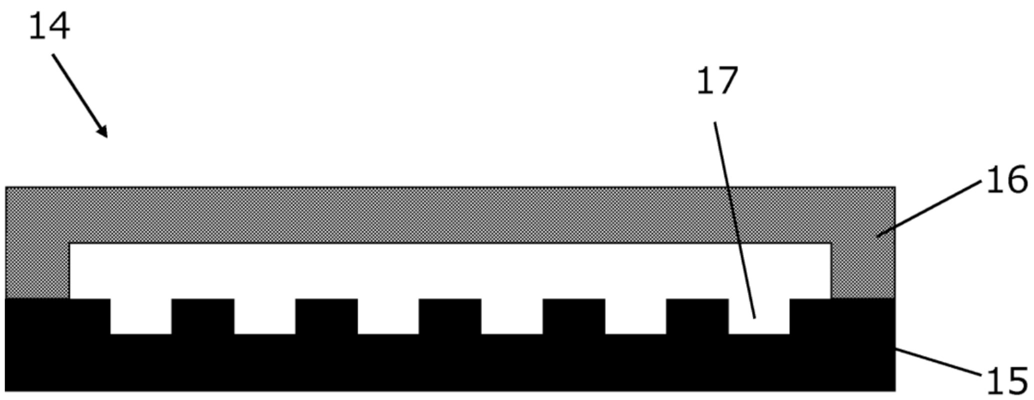


Fig. 6

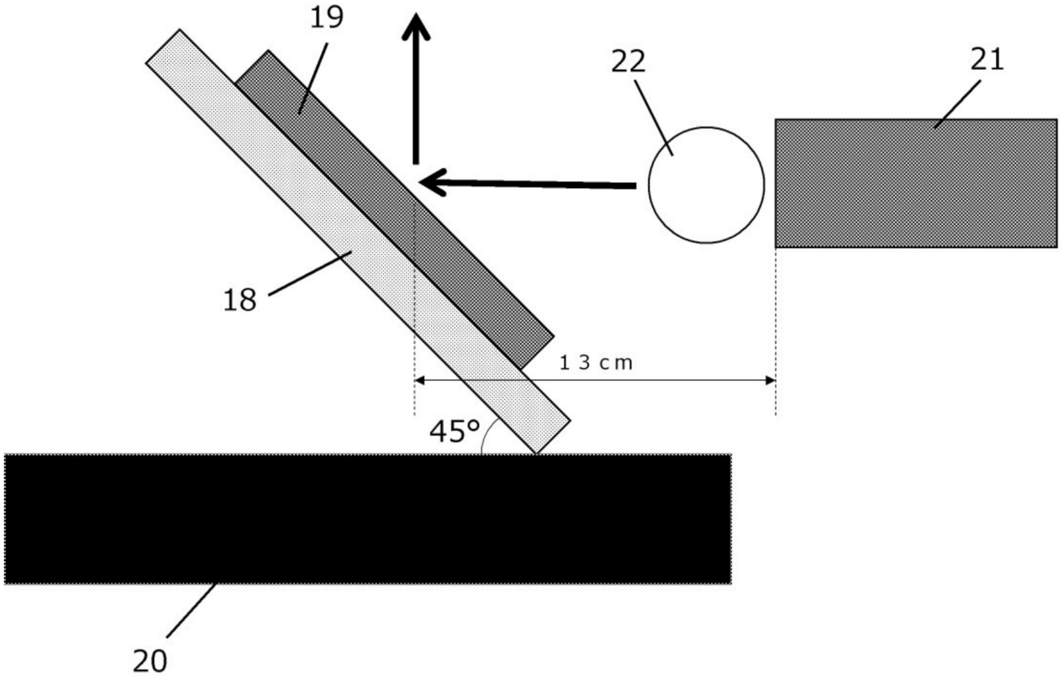


Fig. 7

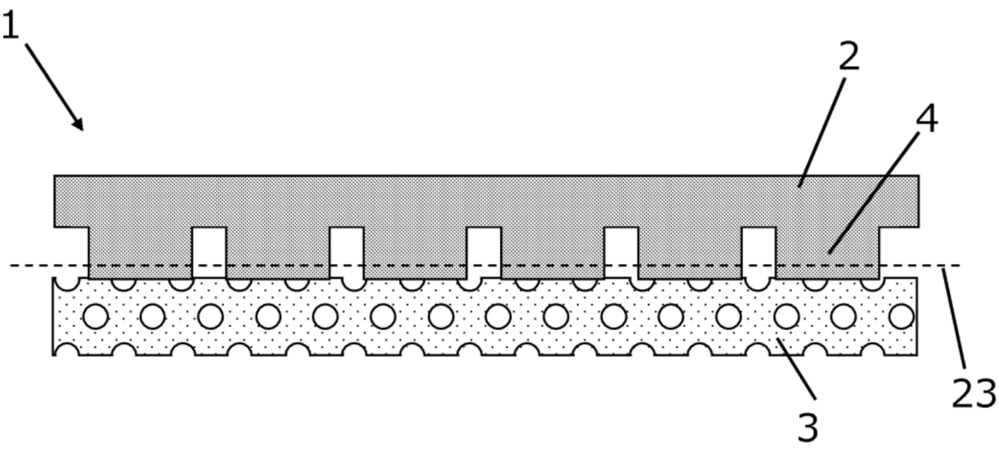


Fig. 8

## INTERNATIONAL SEARCH REPORT

International application No.

**PCT/JP2023/046623**

**A. CLASSIFICATION OF SUBJECT MATTER**

***A63B 59/45***(2015.01)i; ***A63B 59/42***(2015.01)i; ***B32B 3/24***(2006.01)i; ***B32B 3/30***(2006.01)i; ***B32B 25/20***(2006.01)i; ***C08K 3/36***(2006.01)i; ***C08K 7/24***(2006.01)i; ***C08L 83/05***(2006.01)i; ***C08L 83/06***(2006.01)i; ***C08L 83/07***(2006.01)i; *A63B 102/16*(2015.01)n

FI: A63B59/45; A63B59/42; B32B3/24 Z; B32B3/30; B32B25/20; C08K3/36; C08K7/24; C08L83/05; C08L83/06; C08L83/07; A63B102:16

According to International Patent Classification (IPC) or to both national classification and IPC

**B. FIELDS SEARCHED**

Minimum documentation searched (classification system followed by classification symbols)

A63B59/45; A63B59/42; B32B3/24; B32B3/30; B32B25/20; C08K3/36; C08K7/24; C08L83/05; C08L83/06; C08L83/07; A63B102/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-171263 A (MIZUNO CORPORATION) 08 November 2018 (2018-11-08) entire text, all drawings | 1-7 |
| A | JP 2018-171262 A (MIZUNO CORPORATION) 08 November 2018 (2018-11-08) entire text, all drawings | 1-7 |
| A | JP 4-50247 A (MATERIAL ENG TECH LAB INC) 19 February 1992 (1992-02-19) entire text, all drawings | 1-7 |
| A | CN 110639183 A (HANGZHOU FUYANG SANJIANG STATIONERY AND SPORTING GOODS CO., LTD.) 03 January 2020 (2020-01-03) entire text, all drawings | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046623**

| Patent document cited in search report | Publication date (day/month/year) | Patent family member(s) | Publication date (day/month/year) |
|---|---|---|---|
| JP 2018-171263 A | 08 November 2018 | DE 102018204742 A1 | |
| | | CN 108686346 A | |
| JP 2018-171262 A | 08 November 2018 | DE 102018204748 A1 | |
| | | CN 108686347 A | |
| JP 4-50247 A | 19 February 1992 | (Family: none) | |
| CN 110639183 A | 03 January 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011056004 A
- JP 2011056005 A
- JP 2022212453 A